(19)

**Europäisches Patentamt**
**European Patent Office**
**Office européen des brevets**

(11) **EP 4 318 094 A1**

(12) **EUROPEAN PATENT APPLICATION**

(43) Date of publication:
**07.02.2024 Bulletin 2024/06**

(51) International Patent Classification (IPC):
***G02C 7/02*** *(2006.01)*

(21) Application number: **22315180.4**

(52) Cooperative Patent Classification (CPC):
**G02C 7/022;** G02C 2202/24

(22) Date of filing: **05.08.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Essilor International**
**94220 Charenton-Le-Pont (FR)**

(72) Inventors:
• **Hugonneaux, Patrick**
  **94500 Champigny-sur-Marne (FR)**
• **Guillot, Matthieu**
  **92130 Issy les Moulineaux (FR)**

(74) Representative: **Innovincia et al**
  **11, avenue des Tilleuls**
  **74200 Thonon-Les-Bains (FR)**

(54) **LENS ELEMENT**

(57)    The invention relates to a lens element (10) in particular for a spectacle lens, a contact lens or an intraocular lens, intended to be worn by a wearer comprising:
- at least a first zone (12) with a refraction area with a front face and a rear face, the refraction area having a refractive power based on a prescription for said eye of the wearer;
- at least one microstructured second zone (13) outside said first zone (12) and configured for myopia or hyperopia control, said microstructured second zone (13) being characterized by a measurable surface spatial power spectral density $PSD_{measured}(f)$ such that in a spatial frequency range between 0.3 and 10mm$^{-1}$

$$\int_{0.3}^{10} (PSD_{measured}(f) - PSD_{nom}(f))df > 50 \mu m^3 . \ mm^{-1}$$

$PSD_{nom}$ being a nominal function defined through a Hann window

$$PSD_{nom}(f) = \frac{1 * 10^{-7}}{f^2} \ [\mu m^{-3}]$$

with *f* being the spatial frequency.

Figure 1

EP 4 318 094 A1

**Description**

TECHNICAL FIELD

The present disclosure relates to a lens element intended to be worn in front of an eye of a person in particular to suppress, reduce progression or control abnormal refractions of the eye such as myopia or hyperopia. The lens element is in particular an ophthalmic article.

The term "ophthalmic article" is specifically understood to mean a lens, corrective or otherwise, that can be used as spectacle glass, for spectacles for example, particularly sunglasses, goggles, visors or the like or a contact lens worn by the user in direct contact with his eye.

BACKGROUND OF THE DISCLOSURE

Myopia of an eye is characterized by the fact that the eye focuses distant objects in front of its retina. Hyperopia of an eye is characterized by the fact that the eye focuses distant objects behind its retina. Myopia is usually corrected using a concave lens and hyperopia is usually corrected using a convex lens.

It has been observed that some individuals when corrected, using conventional single vision optical lenses, in particular children, focus inaccurately in peripheral part of the retina when they observe an object which is situated at a long distance away, that is to say, in far vision conditions. This is in particular more often the case nowadays with smartphones that children are confronted with and using already in their youngest childhood. Because of this focusing defect on the part of a myopic child which is corrected for his far vision, the image of an object close by is also formed behind his retina, even in the foveal area.

Such focusing defect may have an impact on the progression of myopia of such individuals. One may observe that for most of said individuals the myopia defect tends to increase over time.

Foveal vision corresponds to viewing conditions for which the image of an object looked at is formed by the eye in the central zone of the retina, called the foveal zone.

Peripheral vision corresponds to the perception of elements of a scene that are offset laterally relative to the object looked at, the images of said elements being formed on the peripheral portion of the retina, away from the foveal zone.

The ophthalmic correction with which an ametropic subject is provided is usually adapted for his foveal vision. However, as is known, the correction has to be reduced for the peripheral vision relative to the correction that is determined for the foveal vision. In particular, studies carried out have shown that focusing the light far behind the peripheral retina, even with simultaneous light perfectly focused on the fovea, causes the eye to elongate and therefore causes a myopia defect to increase.

Therefore, it appears that there is a need for a lens element that would suppress, control or at least slow down progression of abnormal refractions of the eye such as myopia or hyperopia.

WO2019206569 in the name of the applicant proposes solutions by disclosing lens elements having optical elements which show in particular a focus shifting leading to a function of non-focusing an image on the peripheral retina of the eye in standard wearing conditions.

The present disclosure aims to provide lens elements having improved myopia or hyperopia control properties.

SUMMARY OF THE DISCLOSURE

In order to achieve this goal, the present disclosure proposes a lens element in particular for a spectacle lens, a contact lens or an intraocular lens, intended to be worn by a wearer comprising:

- at least a first zone with a refraction area with a front face and a rear face, the refraction area having a refractive power based on a prescription for said eye of the wearer;
- at least one microstructured second zone outside said first zone and configured for myopia or hyperopia control, said microstructured second zone being characterized by a measurable surface spatial power spectral density $PSD_{measured}(f)$ such that in a spatial frequency range between 0.3 and 10mm$^{-1}$

$$\int_{0.3}^{10} (PSD_{measured}(f) - PSD_{nom}(f))df > 50\mu m^3 \cdot mm^{-1}$$

$PSD_{nom}$ being a nominal function defined through a Hann window

$$PSD_{nom}(f) = \frac{1 * 10^{-7}}{f^2} \; [\mu m^{-3}]$$

with f being the spatial frequency.

It has been observed that measurable surface spatial power spectral density in a specific spatial frequency range is a good marker for lens elements having an improved myopia or hyperopia control efficiency.

According to further aspects taken alone or in combination relating to the above defined lens element or the above defined method:

In said microstructured second zone, said measured surface spatial power spectral density $PSD_{measured}$ is for example equal or higher in a spatial frequency range between 0.3 and $10mm^{-1}$, in particular between 0.3 and $5mm^{-1}$ than said nominal $PSD_{nom}$ function.

The measured surface spatial power spectral density $PSD_{measured}(f)$ may show in a logarithmic scale at least one local maximum.

At least one local maximum is located in spatial frequency range between $0.3-2mm^{-1}$, limits included.

There may also exist at least two local maxima located in spatial frequency range between $1mm^{-1}$ $-5mm^{-1}$, limits included.

Said microstructured second zone may comprise at least one optical element modifying locally the optical power with respect to the refraction area having a refractive power based on a prescription for said eye of the wear.

Said at least one optical element modifying locally the optical power is for example chosen among a group comprising refractive or diffractive lenslet, unifocal lenslet, bifocal lenslet, multifocal lenslet, torical lenslet, Pi-Fresnel lenslet.

Said microstructured second zone comprises in particular several optical elements modifying locally the optical power and which are disposed according to a predefined pattern.

The predefined pattern may be a ring pattern in particular along several concentric rings or for example a hexagonal pattern.

Said at least one optical element modifying locally the optical power may be disposed on said front face or said rear face.

According to a further aspect, at least one optical element modifying locally the optical power is embedded in a layer of said lens element.

The at least one microstructured second zone may have a surface of at least $10mm^2$.

The least one microstructured second zone is for example located outside a central zone of the lens element.

The microstructured second zone can extend radially from the optical center of the lens element.

The present invention also concerns spectacles equipped with lens elements as defined above.

## BRIEF DESCRIPTION OF THE DRAWINGS

Other advantages and features will become apparent upon reading the description of the following figures, among which:

- figure 1 is a schematic plan view of a lens element for explaining the principle of a lens element configured for myopia / hyperopia control;
- figure 2 is a general cross sectional view of the lens element of figure 1,
- figure 3 shows partially a microstructured second zone with optical elements according a first example,
- Figure 4 shows in log-log graph representation a measured and a nominal surface spatial power spectral density in a specific spatial frequency range according the example of figure 3,
- figure 5 shows partially a microstructured second zone with optical elements according a second example,
- Figure 6 shows in log-log graph representation a measured and a nominal surface spatial power spectral density in a specific spatial frequency range according the example of figure 5.

## DETAILED DESCRIPTION

On all the figures, the same elements bear the same reference numbers.

The following embodiments are only examples. Although the description refers to one or several embodiments, the invention is not limited to these embodiments. In addition, a feature described in relationship with one embodiment may also concern another embodiment even if this is not mentioned expressively. Simple features of different embodiments may also be combined to provide further realizations.

In the present description, by "front" or "rear" face of a layer or a lens element or surface, reference is made to the propagation of the rays of light towards the eye through the ophthalmic lens when an ophthalmic device bearing the ophthalmic lens is worn on a wearer's face. Thus a "front" face is always that which is farest away to the eye of the user and therefore closest to the field of view and a "rear" face is always that which is closest to the eye of the user.

The disclosure relates to a lens element intended to be worn in front of an eye of a wearer.

In the context of the present disclosure, the term "lens element" can refer to a lens blank, an uncut optical lens, a spectacle optical lens edged to fit a specific spectacle frame, an ophthalmic lens or a contact lens.

In the context of the present disclosure, a microstructured zone is considered as a zone providing optical wavefront modification(s) in particular on its intensity, curvature, or light deviation. These wavefont modifications may be achieved by different physical phenomena (interaction of light and matter) like for example refraction, diffraction, absorption (partial or total), scattering etc.

The microstructured zone may be located on top of a substrate, in particular on the front face but also on the rear face. The microstructured zone may also be embedded in such a substrate. For example when the substrate comprises several layers, the microstructured zone can be part of a specific optical layer.

A hard coat layer may protect the lens element and cover the microstructured zone and the refraction area.

As already stated above, functioning of the microstructured zone can be based on absorption principle (locally up to 100%) or not.

Alternatively, functioning of the microstructured zone can also be based on scattering or light diffraction principle.

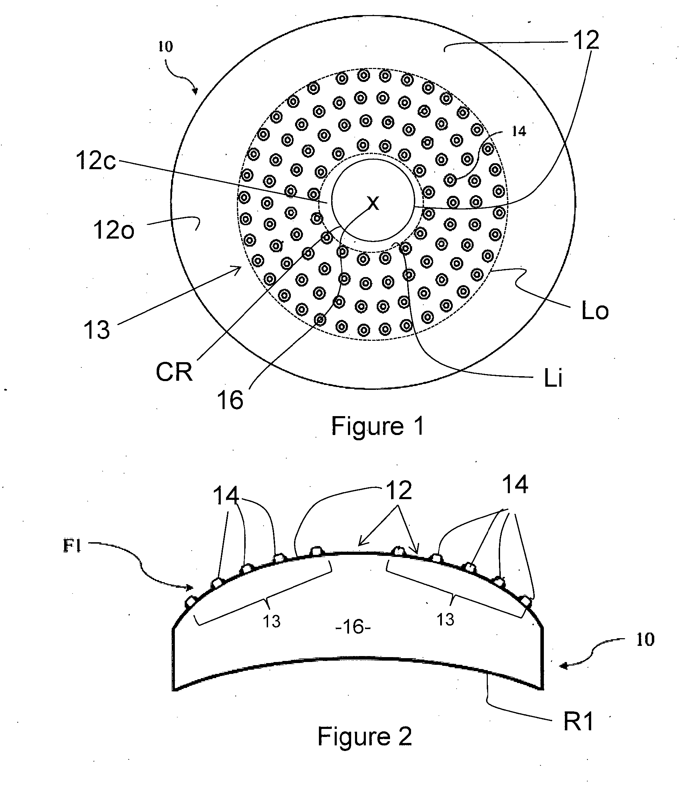

As represented on figures 1 and 2, a lens element 10 according to the disclosure comprises:

- at least a first zone 12 with a refraction area, and
- at least one microstructured second zone 13 which is configured for myopia or hyperopia control and located outside said first zone 12.

The microstructured second zone 13 may present for example a plurality of optical elements 14 located for example on the front face 'F1 of lens element 10 and which may overlap partially or not.

In this context, the optical elements 14 may be considered as an optical microstructure having with a certain physical extension Z (deformation/height), and a physical extension X/Y (width/length /diameter).

However, the microstructuring zone 13 can also be achieved in another way without distinctive optical elements 14, but with for example local refractive index variations, local absorption variations or local scatterers.

In these figures 1 and 2, the lens element 10 comprises a substrate 16 and the first zone 12 with the refraction area together with the microstructured second zone 13 with the optical elements 14 form the front face F1 of the lens element 10 which is the interface with the surrounding air.

In other embodiments the microstructured second zone 13 may be embedded in a layer of a multilayer substrate, for example when the substrate comprises several layers. The microstructured second zone 13 can be part of a specific optical layer of the substrate 16.

The substrate 16 is for example made of a plastic material, for instance a polymer substrate like a thermoset, in particular made of poly(urea-urethane), or thermoplastic plastic material, in particular made of polyamide (PA), like nylon or a polycarbonate, or polyester.

The microstructured second zone 13 and in particular the optical elements 14 may be made of the same material as the substrate 16 and have therefore the same refractive index.

In other examples, in particular when embedded, the microstructured zone 13 may be made with a different material having a refractive index different from the refractive material forming the substrate 16.

Optical elements 14 of said second zone may modify locally the optical power with respect to the first zone 12 with the refraction area having a refractive power based on a prescription for said eye of the wear.

At least one optical element 14 modifying locally the optical power is chosen among a group comprising refractive or diffractive lenslet, unifocal lenslet, bifocal lenslet, multifocal lenslet, torical lenslet, Pi-Fresnel lenslet.

As shown in figures 1 and 2, the second microstructured zone 13 comprises several optical elements 14 modifying locally the optical power and disposed according to a predefined pattern, like a ring pattern in particular along several concentric rings. Other pattern can be chosen like for example a hexagonal pattern.

As a possible example, the optical elements 14 are for example in figure 1 and 2 protruding from the front face F1.

In other embodiments, the microstructured second zone 13 and the optical elements 14 may be located on the rear side R1 of the substrate 16.

In other examples, the optical elements 14 may be formed by cavities (open or closed), recesses or holes.

The said at least one microstructured second zone 13 has a surface of at least $10mm^2$.

The first zone 12 with the refractive area is preferably formed as the area other than the areas formed by the at least one microstructured second zone 13. In other words, the refractive area 12 is the complementary area to the areas occupied by the microstructured second zone(s) 13.

In the present case in figure 1, the microstructured second zone 13 is for example delimited by a dashed outer circle Lo and a dashed inner circle Li. Figure 1 also shows two first zones 12 having annular shape for zone 12o and circular shape for the central portion 12c

The first zone 12 (comprising 12c and 12o) with the refraction area is configured to provide to the wearer in standard wearing conditions, in particular for foveal vision, a first optical power based on the prescription of the wearer for correcting an abnormal refraction of said eye of the wearer. The object of the first zone 12 with the refraction area is to focus incoming parallel light on the retina.

The microstructured zone 13 aims to produce non-focalised light, for example in front of the retina and in particular in peripheral zones in order to slow down myopia.

The wearing conditions are to be understood as the position of the lens element 10 with relation to the eye of a wearer, for example defined by a pantoscopic angle, a Cornea to lens distance, a Pupil-cornea distance, a center of rotation of the eye (CRE) to pupil distance, a CRE to lens distance and a wrap angle.

As shown in figure 1, the at least one microstructured second zone 13 is located outside a central zone CR of the lens element 10.

In some embodiments, like shown in figure 1, the microstructured second zone 13 extends radially from the optical centre 16 of the lens element 10.

A lens element 10 as presented on figures 1 and 2 may be manufactured in various ways in particular by moulding and/ or machining and polishing a substrate 16 or a lens blank.

In order to achieve improved myopia/ hyperopia control, the microstructured second zone 13 for myopia or hyperopia control is characterized by a measurable surface spatial power spectral density $PSD_{measured}(f)$ such that in a spatial frequency range between 0.3 mm$^{-1}$ and 10mm$^{-1}$

$$\overline{\Delta PSD} = \int_{0.3mm^{-1}}^{10mm^{-1}} (PSD_{measured}(f) - PSD_{nom}(f))df > 50\mu m^3 \cdot mm^{-1}$$

$PSD_{nom}$ being a nominal function defined through a Hann window

$$PSD_{nom}(f) = \frac{1 * 10^{-7}}{f^2} \, [\mu m^{-3}]$$

with f being the spatial frequency.

The power spectral density PSD represents the magnitude of unevenness of the surface or diopter for light rays on their optical path through the lens element 10. It is in particular defined in a standard ISO 10110-8:2017 entitled "Optics and photonics .- Preparation of drawings for optical elements and systems - Part 8: Surface texture".

Surface texture is a characteristic relating to the profile of an optical surface that can be effectively described with statistical methods.

In the spatial frequency range beyond 30mm$^{-1}$, PSD describes "surface roughness" which is not of interest for the present invention.

For myopia or hyperopia control, the spatial frequency range of interest is between 0.3 mm$^{-1}$ and 10mm$^{-1}$.

$PSD_{measured}(f)$ is the measured PSD function. Such a measurement can be carried out mechanically or optically. Optical non-contact measurement is in particular preferred when the microstructured second zone 13 is embedded.

Such method first requires measuring the surface of the optical lens. Such surface measurements may be carried out by tactile surface measuring instrument or a non-contact instrument.

One can use a surface profiler, coordinate Measuring Machines, or Noncontact 3D Optical Profilers or any other known surface measuring device. One can measure a local or global area, depending on the technology used.

Some options can be used to measure a larger area such as rectangular or circular stitching. The goal is to measure optical elements over at least the zone of interest.

One can measure the top surface of the optical lens or the surface under the coating layer(s) or even optical elements encapsulated between the front and rear surfaces of the optical lens. For example, the surface of the optical elements may be measured using interferometry. In such case, the index of the coating layer(s) should be known to compensate for the altitude and deduce the true surface from it.

The second optional step of the method is to remove the shape of the first zone 12 with the refractive area of the optical lens 10. The shape of the first zone 12 with the refractive area may be removed prior to any other metrological operation. However, as the spatial frequency of the shape of the first zone 12 with the refractive area is out of the range of the spatial frequency of the microstructured second zone 13, this second step can be considered as optional and has limited influence on the PSD function in the spatial frequency range between $0.3\text{mm}^{-1}$ and $10\text{mm}^{-1}$.

This second step may be carried out using any known standard solution for analyzing profilometry and topography data. The shape of the first zone 12 with the refractive area is usually a revolving shape (cylinder, sphere) corresponding to the prescription of the eye of the wearer.

The metrologist is to perform an adjustment or a shape removal before proceeding to the calculation of the surface condition parameters. The operation consists in modeling a shape and associating it with the measured points to then subtract the shape and obtain a flat or nearly flat surface.

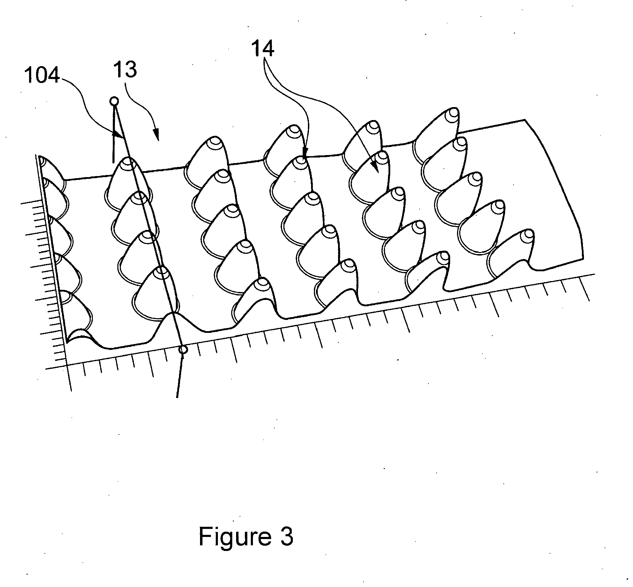

This is shown as an example in figure 3 showing partially a microstructured second zone 13 with optical elements 14.

In some cases, it may be useful to remove the natural shape by a spherical equation, by a complex polynomial equation, by filtering or by a complex algorithm which uses a Zernike polynomial.

When the base radius is unknown, it may be calculated by the method of the least squares. It is a standard approach in regression analysis to approximate the solution of overdetermined systems by minimizing the sum of the squares of the residuals made in the results of every single equation. The same approach can be used with a polynomial including power higher than 3. An alternative method is to define a fit surface based on a classic subset of orthogonal Zernike polynomials.

Several statistical parameters can be used as an indicator to determine the best method or best order of approximation: RMS root mean square, average roughness, area flatness deviation.

Measuring the microstructured second zone(s) 13 over the whole surface of the optical lens 10 may be complex with the current available measuring device.

The disclosure further relates to a method for measuring the whole surface of the optical lens using a currently available optical profiler.

The optical profiler, for example an interferometry device, is able to measure the shape, waveness, roughness of the surface of the optical lens and in particular of the optical elements, by a technique which uses the interference of superimposed waves to extract information of altitude (x, y, z data).

Combined with a X, Y motorized stage and stitching process, one can extend the measure, larger than the field of the initial objective. Most measuring device use the x,y position of each frame to compute the final stitching because the accuracy is better than using the common data of each frame. At the end, one can measure all the structure of optical elements, for example the rings of optical elements 14 represented on figure 1.

This method is also available for measuring optical elements that are encapsulated, i.e. comprised between the front and back surfaces of the optical lens, or under a coating.

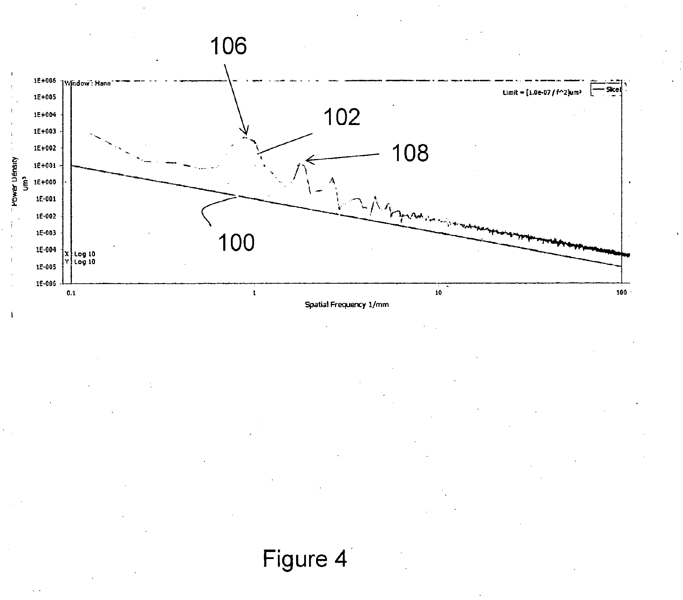

Figure 4 shows in log-log graph representation:

- PSD$_{nom}$ , the a nominal function defined through a Harin window and referenced 100, and
- PSD$_{measured}$(*f*), the measured surface spatial power spectral density for the example of a microstructured second zone 13 as shown in figure 3 and referenced 102.

Line 104 in figure 3 corresponds to the tangential slice along which the calculations have been carried out.

For the profile in figures 3 and 4,

$$\int_{0.3mm^{-1}}^{10mm^{-1}} (\text{PSD}_{measured}(\text{f}) - \text{PSD}_{nom}(\text{f}))df = 120\mu m^3 . \; mm^{-1}$$

Even in taking other cross sectional lines along which the calculation have been carried out, for example across two optical elements 14, the relationship $\overline{(\varDelta PSD)} > 50\mu m^3 . \; mm^{-1}$ is verified.

It has been shown that lens elements having such microstructured second zone 13 are quite efficient for myopia or hyperopia control.

As can be seen also in figure 4, in said microstructured second zone 13, the measured surface spatial power spectral density PSD$_{measured}$ is equal or higher in a spatial frequency range between 0.3 and $10\text{mm}^{-1}$ , in particular

between 0.3 and 5mm$^{-1}$ than said nominal PSD$_{nom}$ function.

. Furthermore the measured surface spatial power spectral density PSD$_{measured}$(f) shows in a logarithmic scale at least one local maximum referenced 106.

The at least one local maximum 106 is located in a spatial frequency range between 0.3-2mm$^{-1}$, limits included, in particular at 0.9mm$^{-1}$.

As can be seen in figure 4, a second local maximum 108 is located at 1.8mm$^{-1}$.

Thus there are at least two local maxima 106 and 108 located in spatial frequency range between 1 mm$^{-1}$ - 5mm$^{-1}$, limits included.

These local maxima 106 and 108 are quite significant because they can be considered as a "signature" of the microstructured second zone 13.

The higher the local maximum, in particular the first local maximum 106, the more the microstructured second zone 13 has a periodic arrangement of optical elements 14 or wavefront shaping variations which enhances the myopia / hyperopia control.

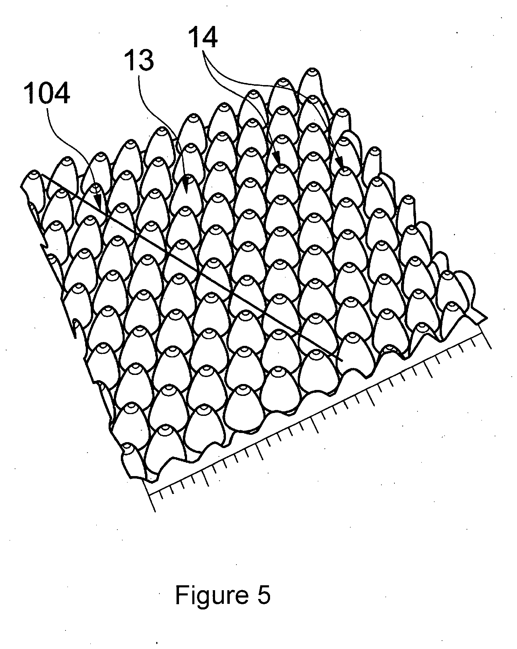

Figure 5 is a figure similar to figure 3 and showing partially a microstructured second zone 13 with optical elements 14 for another embodiment where the optical elements 14 are disposed according to a hexagonal pattern.

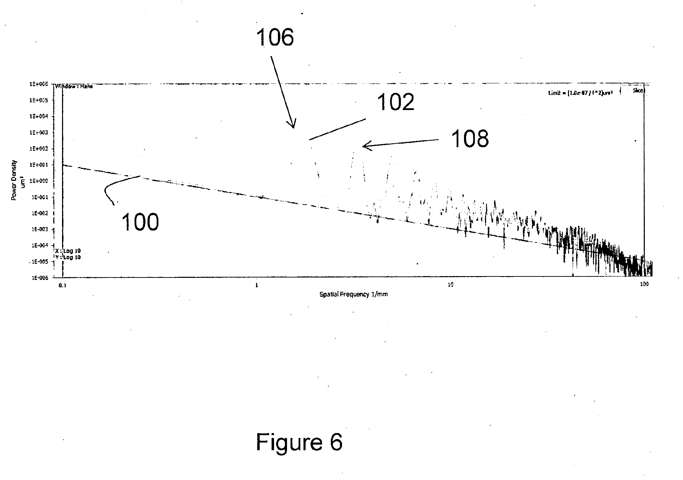

Figure 6 is similar to figure 4 and shows for the microstructured second zone 13 of figure 5 in log-log graph representation:

- PSD$_{nom}$ , the a nominal function defined through a Hann window and referenced 100, and
- PSD$_{measured}$(f), the measured surface spatial power spectral density for the example of a microstructured second zone 13 as shown in figure 5 and referenced 102.

For the profile in figures 5 and 6,

$$\int_{0.3mm^{-1}}^{10mm^{-1}} (\text{PSD}_{measured}(\text{f}) - \text{PSD}_{nom}(\text{f}))df = 631\mu m^3 \cdot mm^{-1}$$

In this case, there are also two local maxima 106 and 108 located respectively at 1.7mm$^{-1}$ and 3.4mm$^{-1}$.

The disclosure has been described above with the aid of embodiments without limitation of the general inventive concept. Many further modifications and variations will be apparent to those skilled in the art upon making reference to the foregoing illustrative embodiments, which are given by way of example only and which are not intended to limit the scope of the disclosure, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the disclosure.

**Claims**

1. A lens element (10) in particular for a spectacle lens, a contact lens or an intraocular lens, intended to be worn by a wearer comprising:

   - at least a first zone (12) with a refraction area with a front face (F1) and a rear face (R1), the refraction area having a refractive power based on a prescription for said eye of the wearer;
   - at least one microstructured second zone (13) outside said first zone (12) and configured for myopia or hyperopia control, said microstructured second zone (13) being **characterized by** a measurable surface spatial power spectral density PSD$_{measured}$(f) such that in a spatial frequency range between 0.3 and 10mm$^{-1}$

$$\int_{0.3}^{10} (\text{PSD}_{measured}(\text{f}) - \text{PSD}_{nom}(\text{f}))df > 50\mu m^3 \cdot mm^{-1}$$

PSD<sub>nom</sub> being a nominal function defined through a Hann window

$$PSD_{nom}(f) = \frac{1 * 10^{-7}}{f^2} \ [\mu m^{-3}]$$

with

f being the spatial frequency.

2. Lens element according to claim 1, wherein in said microstructured second zone (13), said measured surface spatial power spectral density $PSD_{measured}$ is equal or higher in a spatial frequency range between 0.3 and 10mm$^{-1}$ , in particular between 0.3 and 5mm$^{-1}$ than said nominal $PSD_{nom}$ function.

3. Lens element according to claim 1 or 2, wherein the measured surface spatial power spectral density $PSD_{measured}(f)$ shows in a logarithmic scale at least one local maximum.

4. Lens element according to any of claims 1- 3, wherein at least one local maximum (106) is located in spatial frequency range between 0.3-2mm$^{-1}$, limits included.

5. Lens element according to any of claims 1- 4, wherein at least two local maxima (106, 108) are located in spatial frequency range between 1mm$^{-1}$ -5mm$^{-1}$, limits included.

6. Lens element according to any of claims 1- 5, wherein said microstructured second zone (13) comprises at least one optical element (14) modifying locally the optical power with respect to the refraction area having a refractive power based on a prescription for said eye of the wear.

7. Lens element according to claim 6, wherein said at least one optical element (14) modifying locally the optical power is chosen among a group comprising refractive or diffractive lenslet, unifocal lenslet, bifocal lenslet, multifocal lenslet, torical lenslet, Pi-Fresnel lenslet.

8. Lens element according to claim 6 or 7, wherein said microstructured second zone (13) comprises several optical elements (14) modifying locally the optical power and which are disposed according to a predefined pattern.

9. Lens element according claim 8, wherein the predefined pattern is a ring pattern in particular along several concentric rings.

10. Lens element according claim 8, wherein the predefined pattern is a hexagonal pattern.

11. Lens element according to any of claims 6- 10, wherein said at least one optical element (14) modifying locally the optical power is disposed on said front face (F1) or said rear face (R1).

12. Lens element according to any of claims 6- 10, wherein said at least one optical element (14) modifying locally the optical power is embedded in a layer of said lens element (10).

13. Lens element according to any previous claim, wherein the said at least one microstructured second zone (13) has a surface of at least 10mm$^2$.

14. Lens element according to any previous claim, wherein said at least one microstructured second zone (13) is located outside a central zone (CR) of the lens element (10).

15. Lens element according to any previous claim, wherein said microstructured second zone (13) extends radially from the optical center (16) of the lens element (10).

Figure 1

Figure 2

Figure 3

Figure 4

Figure 5

Figure 6

Europäisches
Patentamt

European
Patent Office

Office européen
des brevets

**EUROPEAN SEARCH REPORT**

Application Number

EP 22 31 5180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/074243 A1 (ESSILOR INT [FR]) 14 April 2022 (2022-04-14) | 1-5, 13-15 | INV. G02C7/02 |
| A | * figures 1, 3 *<br>* page 3, line 28 – page 4, line 25 *<br>* page 14, line 21 – page 15, line 18 * | 6-12 | |
| X | US 2022/146857 A1 (HONES JR PETER [US] ET AL) 12 May 2022 (2022-05-12)<br>* figures 9A, 9B *<br>* paragraphs [0007] – [0009], [0020], [0061], [0107] – [0114], [0128], [0132], [0133] *<br>* paragraph [0168] * | 1-15 | |
| X | WO 2022/136056 A1 (ESSILOR INT [FR]) 30 June 2022 (2022-06-30)<br>* figure 1 *<br>* page 2, line 10 – line 24 *<br>* page 5, line 4 – line 19 *<br>* page 7, line 8 – page 8, line 7 *<br>* page 9, line 26 *<br>* page 10, line 7 – line 20 * | 1-15 | |
| X | US 11 226 497 B2 (BRIEN HOLDEN VISION INSTITUTE LTD [AU]) 18 January 2022 (2022-01-18)<br>* column 4, line 20 – column 5, line 18 *<br>* column 7, line 3 – line 9 *<br>* column 10, line 50 – column 11, line 23 *<br>* column 23, line 43 – column 28, line 15 *<br>* column 49, line 61 – column 50, line 2 * | 1-15 | TECHNICAL FIELDS SEARCHED (IPC)<br><br>G02C |
| A | EP 3 067 333 A1 (SCHOTT AG [DE]) 14 September 2016 (2016-09-14)<br>* paragraphs [0001], [0092] – [0099] * | 1-15 | |

–/--

The present search report has been drawn up for all claims

| Place of search | Date of completion of the search | Examiner |
|---|---|---|
| Munich | 17 January 2023 | Vazquez Martinez, D |

EPO FORM 1503 03.82 (P04C01)

Europäisches
Patentamt

European
Patent Office

Office européen
des brevets

**EUROPEAN SEARCH REPORT**

Application Number

EP 22 31 5180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TAKACS PETER Z: "Standardization of methods for extracting statistics from surface profile measurements", PROCEEDINGS OF SPIE, IEEE, US, vol. 9173, 27 August 2014 (2014-08-27), pages 917309-917309, XP060039374, DOI: 10.1117/12.2063113 ISBN: 978-1-62841-730-2 * the whole document * | 1-15 | |
| A | PARKS ROBERT E ET AL: "The structure function as a metric for roughness and figure", PROCEEDINGS OF SPIE; [PROCEEDINGS OF SPIE ISSN 0277-786X VOLUME 10524], SPIE, US, vol. 9951, 27 September 2016 (2016-09-27), pages 99510J-99510J, XP060076205, DOI: 10.1117/12.2238600 ISBN: 978-1-5106-1533-5 * the whole document * | 1-15 | |

**TECHNICAL FIELDS SEARCHED (IPC)**

The present search report has been drawn up for all claims

| Place of search | Date of completion of the search | Examiner |
|---|---|---|
| Munich | 17 January 2023 | Vazquez Martinez, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 22 31 5180

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2023

| Patent document cited in search report | | Publication date | Patent family member(s) | | | Publication date |
|---|---|---|---|---|---|---|
| WO 2022074243 | A1 | 14-04-2022 | NONE | | | |
| US 2022146857 | A1 | 12-05-2022 | CN | 113661434 | A | 16-11-2021 |
| | | | EP | 3931626 | A1 | 05-01-2022 |
| | | | US | 2022146857 | A1 | 12-05-2022 |
| | | | WO | 2020180817 | A1 | 10-09-2020 |
| WO 2022136056 | A1 | 30-06-2022 | NONE | | | |
| US 11226497 | B2 | 18-01-2022 | AU | 2017351635 | A1 | 23-05-2019 |
| | | | CN | 110226118 | A | 10-09-2019 |
| | | | CN | 114637129 | A | 17-06-2022 |
| | | | EP | 3532891 | A1 | 04-09-2019 |
| | | | JP | 2020500328 | A | 09-01-2020 |
| | | | KR | 20190076005 | A | 01-07-2019 |
| | | | SG | 10202107685Y | A | 30-08-2021 |
| | | | SG | 11201903710Q | A | 30-05-2019 |
| | | | US | 2020073147 | A1 | 05-03-2020 |
| | | | WO | 2018076057 | A1 | 03-05-2018 |
| EP 3067333 | A1 | 14-09-2016 | DE | 102015103461 | A1 | 15-09-2016 |
| | | | EP | 3067333 | A1 | 14-09-2016 |
| | | | JP | 2016169147 | A | 23-09-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019206569 A